# EUROPÄISCHE PATENTSCHRIFT

(11) **EP 3 002 179 B1**
(45) Veröffentlichungstag und Bekanntmachung des Hinweises auf die Patenterteilung: **14.06.2017**
(21) Anmeldenummer: 15184378.6
(22) Anmeldetag: 09.09.2015
(51) Int. Cl.: B62D 55/088

(54) **LAUFWERK FÜR EIN ARBEITSFAHRZEUG**
RUNNING GEAR FOR A WORK VEHICLE
TRAIN DE ROULEMENT POUR UN ENGIN DE TRAVAIL

(30) Priorität: 30.09.2014 DE 102014114219
(43) Veröffentlichungstag der Anmeldung: 06.04.2016
(73) Patentinhaber: CLAAS Industrietechnik GmbH, 33106 Paderborn (DE)
(72) Erfinder: Obermeier-Hartmann, Robert, 33142 Büren (DE); Heining, Jeff, 33165 Lichtenau (DE); Weingärtner, Felix, 32052 Herford (DE)
(74) Vertreter: Budach, Steffen

(56) Entgegenhaltungen:
- US-A- 2 560 307
- US-A- 4 553 790
- US-A- 5 733 020
- US-A1- 2002 195 875
- US-A1- 2008 150 355
- US-B1- 8 827 382

## Beschreibung

Die Erfindung betrifft ein Laufwerk für ein Arbeitsfahrzeug mit zumindest einem Umlenkrad und einem Antriebsrad, die an einem Tragrahmen geführt sind und an ihrem Umfang ein endloses Zugmittel aufnehmen, wobei das Zugmittel an seiner vom überfahrenen Boden abgewandten Fläche über Tragrollen abgestützt ist und wobei am Tragrahmen oder an einem mit diesem verbundenen Bauteil wenigstens eine Vorrichtung zum Abstreifen von Verunreinigungen von einer mit Führungsblöcken versehenen inneren Mantelfläche des Zugmittels vorgesehen ist, die zumindest ein zur inneren Mantelfläche des Zugmittels geführtes Abstreifelement aufweist.

Arbeitsfahrzeuge, die als Baumaschinen verwendet werden und insbesondere für Erdbewegungen sowie zum Transport hoher Lasten dienen, sind zumeist als Gleiskettenfahrzeuge ausgebildet. Die beiden als Raupenantriebe ausgeführten Laufwerke erstrecken sich dabei beidseitig der Längsmittelebene des Fahrgestells der Baumaschine im Wesentlichen über die gesamte Länge des Fahrgestells. Das Zugmittel ist in diesem Fall als Kette ausgebildet, wobei auf der Kette über Scharniere aus Stahl, Kunststoff oder Gummi hergestellte Laufflächenglieder angeordnet sind und als Kettenritzel ausgebildete Umlenkräder verwendet werden.

Neben diesen Ausbildungen von Laufwerken sind auch solche bekannt, bei denen an Stelle der mit Laufflächengliedern versehenen Ketten aus einem Gummi-Metall-Verbundwerkstoff bestehende Gurtbandlaufwerke verwendet werden. In beiden Fällen sind zwischen den beiden an einem Tragrahmen geführten Umlenkrädern Tragrollen angeordnet, die unter anderem für eine gleichmäßigere Lastverteilung und eine bessere Anpassung an unterschiedliche Bodenkonturen sorgen sollen.

Da sich mit einem Zugmittel versehene Laufwerke dadurch auszeichnen, dass die Geländegängigkeit und das Traktionsverhalten des mit ihnen ausgerüsteten Arbeitsfahrzeugs verbessert werden, wobei auf Grund der größeren Aufstandsfläche auch der Bodendruck verringert wird, finden diese Laufwerke auch vermehrt Anwendung an landwirtschaftlichen Arbeitsfahrzeugen, wie z. B. Erntemaschinen, insbesondere selbstfahrende Mähdrescher oder Feldhäcksler, Ackerschleppern und Systemfahrzeugen. Dabei sind zumeist Halbraupenanordnungen vorgesehen, d.h., es ist eine der Antriebsachsen an Stelle der Antriebsräder mit Laufwerken versehen, wobei statt einer Kette ein profiliertes Gurtband verwendet werden kann. Systemfahrzeuge, die vorzugsweise als Trac-Fahrzeuge mit einem hinter einer Kabine liegenden Anbauraum oder als Geräteträger ausgebildet sind, weisen zumeist Laufwerke an einer der angetriebenen Achsen auf. Es kann sich aber auch um Systemfahrzeuge handeln, die an beiden Antriebsachsen mit Raupenlaufwerken versehen sind und deren Fahrgestell mit einer Knicklenkung oder einer Allradlenkung versehen ist.

An Erntemaschinen kamen entsprechende Laufwerke in der Vergangenheit dann zur Anwendung, wenn eine als selbstfahrender Mähdrescher ausgebildete Erntemaschine für die Reisernte verwendet wurde. Klimatische Bedingungen, die während der Erntezeit zu erheblicher Bodenfeuchtigkeit führen, sind aber ein wesentlicher Grund dafür, dass diese Laufwerke auch an Mähdreschern verwendet werden, die bei der Getreide- oder Rapsernte zum Einsatz kommen, damit trotz des feuchten und eventuell tiefgründigen Bodens die Ernte möglichst bodenschonend durchgeführt werden kann.

DE 10 2012 109 085 A1 offenbart ein Laufwerk für ein Arbeitsfahrzeug mit einem Umlenkrad und einem Antriebsrad, die an einem Tragrahmen geführt sind und an ihrem Umfang ein endloses Zugmittel aufnehmen. Das als Gurtband ausgebildete Zugmittel ist an seiner vom überfahrenen Boden abgewandten Fläche über Tragrollen abgestützt ist. Ein ähnliches Laufwerk ist von US20080150355 bekannt.

Aus SU 1 751 035 A1 ist ein Laufwerk für ein Fahrzeug bekannt, das ein Umlenkrad und ein Antriebsrad aufweist, die an einem Tragrahmen geführt sind und an ihrem Umfang ein endloses, ebenfalls als Gurtband ausgebildetes Zugmittel aufnehmen. An dem Tragrahmen ist eine Vorrichtung zum Abstreifen von Erde und anderen Verunreinigungen von einer mit Führungsblöcken versehenen inneren Mantelfläche des Zugmittels vorgesehen, die ein zur inneren Mantelfläche des Zugmittels geführtes Abstreifelement aufweist. Das Abstreifelement ist federnd in Richtung der Führungsblöcke vorgespannt, so dass in diesem Bereich permanent Reibung zwischen dem Abstreifelement und diesem Bereich des Zugmittels auftritt, die zu einer Beschädigung des Zugmittels führen kann. Zudem können sich Erde und Verunreinigungen an dem Abstreifelement festsetzen, wodurch zum einen die Funktion des Abtreifelementes beeinträchtigt wird und zum anderen Schäden am Zugmittel hervorgerufen werden.

Aufgabe der Erfindung ist es, das Abstreifen von Verunreinigungen von einer mit Führungsblöcken versehenen inneren Mantelfläche eines Zugmittels eines Laufwerks dahingehend zu verbessern, dass ein Festsetzen von Verunreinigungen an einem zum Abstreifen verwendeten Abstreifelement vermieden wird.

Diese Aufgabe wird durch den unabhängigen Anspruch gelöst. Vorteilhafte Ausgestaltungen sind insbesondere in den abhängigen Ansprüchen angegeben, die jeweils für sich genommen oder in verschiedener Kombination miteinander einen Aspekt der Erfindung darstellen können.

Das erfindungsgemäße Laufwerk für ein Arbeitsfahrzeug umfasst zumindest ein Umlenkrad und ein Antriebsrad, die an einem Tragrahmen geführt sind und an ihrem Umfang ein endloses Zugmittel aufnehmen, wobei das Zugmittel an seiner vom überfahrenen Boden abgewandten Fläche über Tragrollen abgestützt ist. Dabei ist am Tragrahmen oder an einem mit diesem verbundenen Bauteil wenigstens eine Vorrichtung zum Abstreifen von Verunreinigungen von einer mit Führungsblöcken versehenen inneren Mantelfläche des Zugmittels vorgesehen. Die Vorrichtung zum Abstreifen von Verunreinigungen weist zumindest ein zur inneren Mantelfläche des Zugmittels geführtes Abstreifelement auf, wobei das Abstreifelement zumindest teilweise elastisch verformbar ausgebildet ist. An dem Abstreifelement ist wenigstens ein Mitnehmer zur elastischen Auslenkung und/oder Verformung zumindest eines Abschnitts des Abstreifelements vorgesehen. Dieser Mitnehmer ragt von dem Abstreifelement ab und verläuft derart in Bezug auf die Führungsblöcke, dass er beim Umlauf des Zugmittels nacheinander in sämtliche zwischen den Führungsblöcken vorgesehene Zwischenräume eingreift und von den Führungsblöcken ausgelenkt wird.

Erfindungsgemäß kann das Abstreifelement während eines Umlaufs des Zugmittels durch ein wiederholtes Auslenken des Mitnehmers wiederholt zumindest teilweise in Vibration versetzt und/oder verformt werden, wodurch an dem Abstreifelement befindliche Verunreinigungen zuverlässig von dem Abstreifelement entfernt werden. Hierdurch wird die Funktion des Abstreifelementes dauerhaft erhalten, so dass das gewünschte Abstreifen von Verunreinigungen von der inneren Mantelfläche des Zugmittels dauerhaft erfolgen kann. Da der Mitnehmer wiederholt von den Führungsblöcken elastisch verformt wird, versetzt er das Abstreifelement in Vibration. Dadurch wird das Anhaften von Verunreinigungen, wie z.B. Lehm an dem Abstreifelement verhindert. Wenn diese zunächst am Abstreifelement anhaften, werden sie aufgrund der Vibration und der elastischen Verformung des Abstreifelements zuverlässig von diesem abgelöst.

Dass das Abstreifelement zur inneren Mantelfläche des Zugmittels geführt ist, bedeutet, dass das Abstreifelement in einem geringen Abstand zu der inneren Mantelfläche angeordnet ist und diese, um Beschädigungen zu vermeiden, nicht berührt. Dabei wird sichergestellt, dass durch die zumindest teilweise elastische Verformbarkeit des Abstreifelements die innere Mantelfläche des Zugmittels im Betrieb des Laufwerks durch dieses nicht berührt wird. Das Auftreffen einer entsprechenden Kante des Abstreifelements könnte anderenfalls zu Beschädigungen des Zugmittels führen.

Die an der inneren Mantelfläche vorhandenen Führungsblöcke wirken mit an dem Umlenkrad, dem Antriebsrad und an den Stützrollen angeordneten Führungsnuten zusammen, um das Zugmittel zu führen und ein Ablaufen des Zugmittels von dem Umlenkrad und dem Antriebsrad beim Umlauf des Zugmittels zu verhindern.

Das Abstreifelement kann teilweise oder vollständig elastisch verformbar ausgebildet sein. Entsprechend kann der Mitnehmer zur elastischen Auslenkung und/oder Verformung zumindest eines Abschnitts des Abstreifelements oder des gesamten Abstreifelements vorgesehen sein. Das Abstreifelement kann eben oder gewölbt, insbesondere ähnlich eines Pflugschars, ausgebildet sein. An dem Abstreifelement können auch zwei oder mehrere entsprechende Mitnehmer angeordnet sein. Die Vorrichtung zum Abstreifen von Verunreinigungen von der inneren Mantelfläche des Zugmittels kann auch zwei oder mehrere entsprechende Abstreifelemente aufweisen, an denen jeweils wenigstens ein entsprechender Mitnehmer angeordnet ist. Es kann auf beiden Seiten der Führungsblöcke jeweils wenigstens ein Abstreifelement mit einem Mitnehmer angeordnet sein.

Gemäß einer vorteilhaften Ausgestaltung ist das Zugmittel als elastischer Riemen ausgebildet. Alternativ kann das Zugmittel als Gleiskette oder anderweitig segmentiert ausgebildet sein.

Nach einer weiteren vorteilhaften Ausgestaltung weist das Abstreifelement eine unter einem Winkel zur Laufrichtung des Zugmittels verlaufende Abstreifkante auf. Hierdurch können während eines Umlaufs des Zugmittels in Kontakt mit dem Abstreifelement kommende Verunreinigungen von den Führungsblöcken weg von der inneren Mantelfläche des Zugmittels gedrängt bzw. abgestreift werden. Das Abstreifelement kann im Bereich der Abstreifkante verstärkt ausgebildet sein. Die Abstreifkante kann in Richtung der von der inneren Mantelfläche des Zugmittels befindlichen Verunreinigungen von dem übrigen Teil des Abstreifelements vorstehen. Die Abstreifkante kann einen welligen Verlauf aufweisen oder mit einer das Abstreifen begünstigenden Strukturierung versehen sein. Außerdem kann das gesamte Abstreifelement mit einer Beschichtung, die das Ablösen von Lehm, Erde oder anderen Verunreinigungen erleichtert, versehen sein.

Vorteilhafterweise ist die Abstreifkante derart gegenüber der inneren Mantelfläche positioniert, dass die Abstreifkante bei der elastischen Auslenkung und/oder Verformung des Abstreifelements die innere Mantelfläche nicht berührt. Hierdurch kann zuverlässig verhindert werden, dass das Zugmittel durch einen körperlichen Kontakt mit dem ausgelenkten bzw. verformten Abstreifelement, beispielsweise durch ein Verkanten, beschädigt wird.

Eine weitere vorteilhafte Ausgestaltung sieht vor, dass das Abstreifelement eine im Wesentlichen dreieckige Außenkontur aufweist und mit einem Haltelement versehen ist. Über das Halteelement kann das Abstreifelement an einem ortsfesten Bauteil des Laufwerks befestigt werden. Das Abstreifelement kann jedoch auch eine anderweitige Außenkontur aufweisen.

In vorteilhafter Weise sind das Abstreifelement und das gemeinsam mit diesem ausgebildete Halteelement als elastisch verformbares Blechteil ausgebildet. Dies geht mit einer robusten und gleichzeitig elastischen Ausgestaltung des Abstreifelementes und des Halteelementes einher. Durch eine Auslenkung des Mitnehmers kann zusätzlich zu dem Abstreifelement auch das Halteelement elastisch ausgelenkt und/oder verformt werden. Zudem gewährleistet die bewegliche Aufhängung des Abstreifelementes über das elastisch ausgebildete Halteelement an dem Laufwerk bzw. einem damit verbundenen Bauteil, dass das Abstreifelement von dem Zugmittel verdrängt werden kann. Hierdurch wird vermieden, dass die innere Mantelfläche des Zugmittels mit dem Abstreifelement derart mechanisch belastet wird, dass es zu einer Beschädigung der inneren Mantelfläche kommt.

Es ist des Weiteren von Vorteil, wenn das Abstreifelement als Kunststoffteil ausgebildet ist. Hierdurch ist das Abstreifelement leichtgewichtig und elastisch ausbildbar. Das Abstreifelement kann aus einem Faserverbundkunststoff hergestellt sein, um dem Abstreifelemente gewünschte Formstabilitäts- und Verschleißeigenschaften zu verleihen. Das Abstreifelement kann allein oder zusammen mit dem Mitnehmer als Spritzgussbauteil hergestellt sein.

Es wird zudem vorgeschlagen, dass der Mitnehmer als elastisches Kunststoffteil ausgebildet ist. Die elastische Ausbildung des Mitnehmers ist derart zu wählen, dass eine Auslenkung des Mitnehmers eine ausreichende elastische Auslenkung und/oder Verformung des Abstreifelementes bewirkt. Durch die Ausbildung des Mitnehmers als elastisches Kunststoffteil werden die zur Auslenkung des Mitnehmers von diesem kontaktierten Führungsblöcke weniger mechanisch beansprucht, insbesondere dann, wenn der Mitnehmer derart aus Kunststoff hergestellt wird, dass seine Abriebfestigkeit geringer als die der Führungsblöcke ist. Hierdurch wird die Dauerhaftigkeit der Führungsblöcke des Zugmittels verbessert.

Ferner ist es von Vorteil, wenn der Mitnehmer als elastisches Metallteil ausgebildet ist. Die elastische Ausbildung des Mitnehmers ist derart zu währen, dass eine Auslenkung des Mitnehmers eine ausreichende elastische Auslenkung und/oder Verformung des Abstreifelementes bewirkt. Durch die Ausbildung des Mitnehmers aus Metall wird der Mitnehmer robuster und dauerhafter.

Die Erfindung ist nicht auf die angegebene Kombination der Merkmale des unabhängigen Anspruchs und der abhängigen Ansprüche beschränkt. Es ergeben sich darüber hinaus weitere Möglichkeiten, einzelne Merkmale, insbesondere dann, wenn sie sich aus den Ansprüchen, der nachfolgenden Beschreibung des Ausführungsbeispiels oder unmittelbar aus den Figuren ergeben, miteinander zu kombinieren. Außerdem soll die Bezugnahme der Ansprüche auf die Figuren durch die Verwendung von Bezugszeichen den Schutzumfang der Ansprüche auf keinen Fall auf das dargestellte Ausführungsbeispiel beschränken.

Im Folgenden wird die Erfindung unter Bezugnahme auf die anliegenden Figuren anhand einer bevorzugten Ausführungsformen beispielhaft erläutert, wobei die nachfolgend dargestellten Merkmale sowohl jeweils für sich genommen als auch in unterschiedlicher Kombination miteinander einen Aspekt der Erfindung darstellen können.

Es zeigt:
- Figur 1: als Draufsicht eine schematische Darstellung eine Ausführung eines erfindungsgemäßen Laufwerks mit nicht ausgelenkten Mitnehmern,
- Figur 2: als Draufsicht eine schematische Darstellung des in Figur 1 gezeigten Laufwerks mit ausgelenkten Mitnehmern und
- Figur 3: eine perspektivische Darstellung eines mit einem Mitnehmer versehenen Abstreifelements.

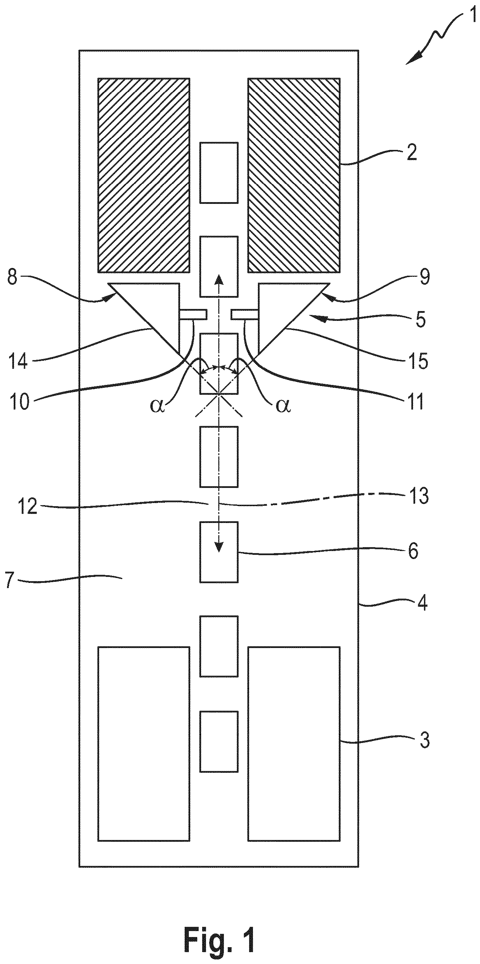

Figur 1 zeigt eine schematische Darstellung eines Ausführungsbeispiels für ein erfindungsgemäßes Laufwerk 1 für ein nicht weitergehender dargestelltes Arbeitsfahrzeug.

Das Laufwerk 1 umfasst ein Umlenkrad 2 und ein Antriebsrad 3, die an einem nicht gezeigten Tragrahmen geführt sind und an ihrem Umfang ein endloses, als elastischer Riemen ausgebildetes Zugmittel 4 aufnehmen. Das Zugmittel 4 ist an seiner vom überfahrenen Boden abgewandten Fläche über nicht gezeigte Tragrollen abgestützt.

An dem Tragrahmen oder an einem mit diesem verbundenen, nicht gezeigten Bauteil ist eine Vorrichtung 5 zum Abstreifen von Verunreinigungen von einer mit Führungsblöcken 6 versehenen inneren Mantelfläche 7 des Zugmittels 4 vorgesehen. Die Vorrichtung 5 umfasst zwei zur inneren Mantelfläche 7 des Zugmittels 4 geführte Abstreifelemente 8 und 9. Jedes Abstreifelement 8 bzw. 9 ist zumindest teilweise elastisch verformbar ausgebildet. An jedem Abstreifelement 8 bzw. 9 ist ein Mitnehmer 10 bzw. 11 zur elastischen Auslenkung und/oder Verformung zumindest eines Abschnitts des jeweiligen Abstreifelements 8 bzw. 9 vorgesehen. Jeder Mitnehmer 10 bzw. 11 verläuft derart in Bezug auf die Führungsblöcke 6, dass er beim Umlauf des Zugmittels 4 nacheinander in sämtliche zwischen den Führungsblöcken 6 vorgesehene Zwischenräume 12 eingreift und von den Führungsblöcken 6 ausgelenkt wird. In Figur 1 sind die Mitnehmer 10 und 11 nicht ausgelenkt.

Jedes Abstreifelement 8 bzw. 9 weist eine unter einem Winkel α zur Laufrichtung 13 des Zugmittels 4 verlaufende Abstreifkante 14 bzw. 15 auf. Jede Abstreifkante 14 bzw. 15 ist derart gegenüber der inneren Mantelfläche 7 positioniert, dass die jeweilige Abstreifkante 14 bzw. 15 bei der elastischen Auslenkung und/oder Verformung des jeweiligen Abstreifelements 8 bzw. 9 die innere Mantelfläche 7 nicht berührt. Jedes Abstreifelement 8 bzw. 9 weist eine im Wesentlichen dreieckige Außenkontur auf und ist mit einem nicht gezeigten Haltelement versehen, über welches das jeweilige Abstreifelement 8 bzw. 9 mit einem weiteren Bauteil des Fahrwerks 2 verbindbar ist. Die Abstreifelemente 8 und 9 sind bezüglich einer Längsmittelebene des Laufwerks 1 spiegelsymmetrisch zueinander angeordnet.

Wenigstens ein Abstreifelement 8 bzw. 9 und das gemeinsam mit dem jeweiligen Abstreifelement 8 bzw. 9 ausgebildete Halteelement können als elastisch verformbares Blechteil ausgebildet sein. Alternativ kann wenigstens ein Abstreifelement 8 bzw. 9 als Kunststoffteil ausgebildet sein. Wenigstens ein Mitnehmer 10 bzw. 11 kann als elastisches Kunststoffteil oder als elastisches Metallteil ausgebildet sein.

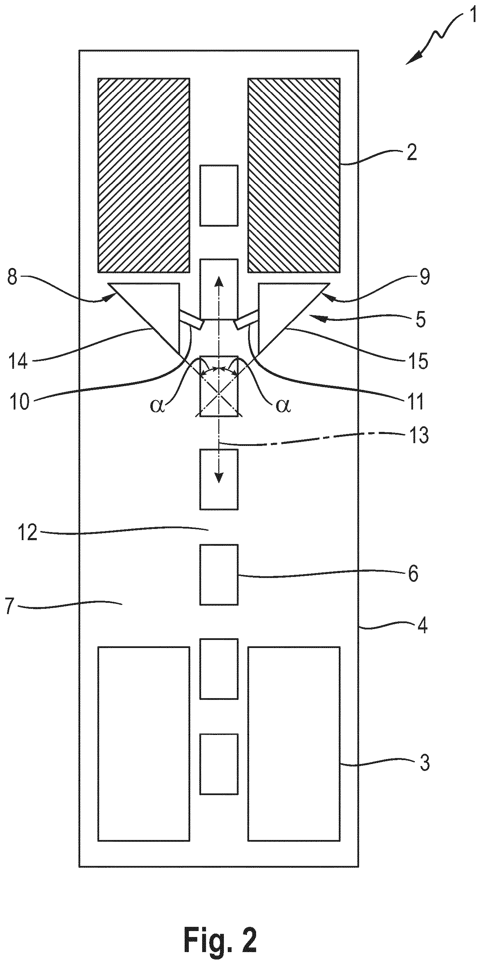

Die Figur 2 zeigt eine schematische Darstellung des in Figur 1 gezeigten Laufwerks 1 mit ausgelenkten Mitnehmern 10 und 11. Hierdurch werden die Abstreifelemente 8 und 9 und gegebenenfalls die daran angeordneten Halteelemente elastische ausgelenkt und/oder verformt.

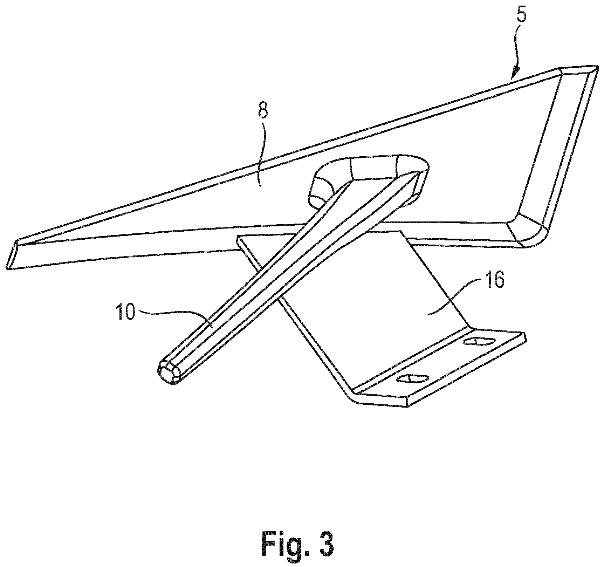

Weiterhin ist in der Figur 3 als Beispiel das Abstreifelement 8 mit dem an diesem befestigten Mitnehmer 10 dargestellt. Aus der perspektivischen Darstellung geht hervor, dass von dem Abstreifelement 8 ein Halteelement 16 ausgeht, über das die gesamte Vorrichtung 5 zum Abstreifen von Verunreinigungen an einem ortsfesten Teil der Laufwerkanordnung befestigt wird. Weiterhin ist der Figur 3 zu entnehmen, dass der Mitnehmer 10 nicht rechtwinklig sondern unter einem Winkel zu einer Fläche des Abstreifelements 8 verläuft und zu seinem freien Ende hin mit einem sich verjüngenden Querschnitt ausgebildet ist.

### Bezugszeichenliste

- 1: Laufwerk
- 2: Umlenkrad
- 3: Antriebsrad
- 4: Zugmittel
- 5: Vorrichtung
- 6: Führungsblock
- 7: innere Mantelfläche
- 8: Abstreifelement
- 9: Abstreifelement
- 10: Mitnehmer
- 11: Mitnehmer
- 12: Zwischenraum
- 13: Laufrichtung
- 14: Abstreifkante
- 15: Abstreifkante
- 16: Halteelement
- α: Winkel

## Patentansprüche

1. Laufwerk (1) für ein Arbeitsfahrzeug mit zumindest einem Umlenkrad (2) und einem Antriebsrad (3), die an einem Tragrahmen geführt sind und an ihrem Umfang ein endloses Zugmittel (4) aufnehmen, wobei das Zugmittel (4) an seiner vom überfahrenen Boden abgewandten Fläche über Tragrollen abgestützt ist und wobei am Tragrahmen oder an einem mit diesem verbundenen Bauteil eine Vorrichtung (5) zum Abstreifen von Verunreinigungen von einer mit Führungsblöcken (6) versehenen inneren Mantelfläche (7) des Zugmittels (4) vorgesehen ist, die zumindest ein zur inneren Mantelfläche (7) des Zugmittels (4) geführtes Abstreifelement (8, 9) aufweist, **dadurch gekennzeichnet, dass** das Abstreifelement (8, 9) zumindest teilweise elastisch verformbar ausgebildet ist, dass an dem Abstreifelement (8, 9) wenigstens ein Mitnehmer (10, 11) zur elastischen Auslenkung und/oder Verformung zumindest eines Abschnitts des Abstreifelements (8, 9) vorgesehen ist, und dass der Mitnehmer (10, 11) derart in Bezug auf die Führungsblöcke (6) verläuft, dass er beim Umlauf des Zugmittels (4) nacheinander in sämtliche zwischen den Führungsblöcken (6) vorgesehene Zwischenräume (12) eingreift und von den Führungsblöcken (6) ausgelenkt wird.

2. Laufwerk (1) nach Anspruch 1, **dadurch gekennzeichnet, dass** das Zugmittel (4) als elastischer Riemen ausgebildet ist.

3. Laufwerk (1) nach Anspruch 1 oder 2, **dadurch gekennzeichnet, dass** das Abstreifelement (8, 9) eine unter einem Winkel (α) zur Laufrichtung (13) des Zugmittels (4) verlaufende Abstreifkante (14, 15) aufweist.

4. Laufwerk (1) nach Anspruch 3, **dadurch gekennzeichnet, dass** die Abstreifkante (14, 15) derart gegenüber der inneren Mantelfläche (7) positioniert ist, dass die Abstreifkante (14, 15) bei der elastischen Auslenkung und/oder Verformung des Abstreifelements (8, 9) die innere Mantelfläche (7) nicht berührt.

5. Laufwerk (1) nach einem der Ansprüche 1 bis 4, **dadurch gekennzeichnet, dass** das Abstreifelement (8, 9) eine im Wesentlichen dreieckige Außenkontur aufweist und mit einem Haltelement (16) versehen ist.

6. Laufwerk (1) nach Anspruch 5, **dadurch gekennzeichnet, dass** das Abstreifelement (8, 9) und das gemeinsam mit diesem ausgebildete Halteelement (16) als elastisch verformbares Blechteil ausgebildet sind.

7. Laufwerk (1) nach einem der Ansprüche 1 bis 5, **dadurch gekennzeichnet, dass** das Abstreifelement (8, 9) als Kunststoffteil ausgebildet ist.

8. Laufwerk (1) nach einem der Ansprüche 1 bis 5 und 7, **dadurch gekennzeichnet, dass** der Mitnehmer (10, 11) als elastisches Kunststoffteil ausgebildet ist.

9. Laufwerk (1) nach einem der Ansprüche 1 bis 5 und 7, **dadurch gekennzeichnet, dass** der Mitnehmer (10, 11) als elastisches Metallteil ausgebildet ist.

## Claims

1. A running gear (1) for a working vehicle comprising at least one direction-changing wheel (2) and a drive wheel (3) which are guided on a support frame and which at their periphery accommodate an endless traction means (4), wherein the traction means (4) is supported by way of support rollers at its surface remote from the ground over which the vehicle is travelling and wherein provided on the support frame or on a component connected thereto is a device (5) for stripping dirt from an inner peripheral surface (7) of the traction means (4) that is provided with guide blocks (6), which device (5) has at least one stripping element (8, 9) guided relative to the inner peripheral surface (7) of the traction means (4), **characterised in that** the stripping element (8, 9) is at least partially elastically deformable, that provided on the stripping element (8, 9) is at least one entrainment means (10, 11) for elastic deflection and/or deformation of at least a portion of the stripping element (8, 9), and that the entrainment means (10, 11) extends in relation to the guide blocks (6) in such a way that when the traction means (4) circulates the entrainment means successively engages into all intermediate spaces (12) between the guide blocks (6) and is deflected by the guide blocks (6).

2. A running gear (1) according to claim 1 **characterised in that** the traction means (4) is in the form of an elastic belt.

3. A running gear (1) according to claim 1 or claim 2 **characterised in that** the stripping element (8, 9) has a stripping edge (14, 15) extending at an angle (α) relative to the direction of movement (13) of the traction means (4).

4. A running gear (1) according to claim 3 **characterised in that** the stripping edge (14, 15) is so positioned with respect to the inner peripheral surface (7) that the stripping edge (14, 15) does not contact the inner peripheral surface (7) upon elastic deflection and/or deformation of the stripping element (8, 9).

5. A running gear (1) according to one of claims 1 to 4 **characterised in that** the stripping element (8, 9) is of a substantially triangular outside contour and is provided with a holding element (16).

6. A running gear (1) according to claim 5 **characterised in that** the stripping element (8, 9) and the holding element (16) formed jointly with same are in the form of an elastically deformable plate portion.

7. A running gear (1) according to one of claims 1 to 5 **characterised in that** the stripping element (8, 9) is in the form of a plastic portion.

8. A running gear (1) according to one of claims 1 to 5 and 7 **characterised in that** the entrainment means (10, 11) is in the form of an elastic plastic portion.

9. A running gear (1) according to one of claims 1 to 5 and 7 **characterised in that** the entrainment means (10, 11) is in the form of an elastic metal portion.

## Revendications

1. Mécanisme de roulement (1) pour un véhicule de travail comprenant au moins une roue de renvoi (2) et une roue motrice (3), lesquelles sont guidées sur un châssis porteur et reçoivent sur leur périphérie un moyen de traction sans fin (4), le moyen de traction (4) étant soutenu par des galets porteurs au niveau de sa surface orientée à l'opposé du sol parcouru et, sur le châssis porteur ou sur un élément structurel relié à celui-ci, étant prévu un dispositif (5) pour racler des impuretés d'une surface enveloppante intérieure (7) du moyen de traction (4) munie de blocs de guidage (6), lequel dispositif comporte au moins un élément de raclage (8, 9) guidé vers la surface enveloppante intérieure (7) du moyen de traction (4), **caractérisé en ce que** l'élément de raclage (8, 9) est conformé de manière au moins partiellement déformable élastiquement, **en ce que** sur l'élément de raclage (8, 9) est prévu au moins un moyen entraîneur (10, 11) pour dévier et/ou déformer élastiquement au moins une portion de l'élément de raclage (8, 9), et **en ce que** le moyen entraîneur (10, 11) passe sur le blocs de guidage (6) de façon à pénétrer successivement dans tous les interstices (12) prévus entre les blocs de guidage (6) lors de la rotation du moyen de traction (4) et à être dévié par les blocs de guidage (6).

2. Mécanisme de roulement (1) selon la revendication 1, **caractérisé en ce que** le moyen de traction (4) est conçu sous la forme d'une courroie élastique.

3. Mécanisme de roulement (1) selon la revendication 1 ou 2, **caractérisé en ce que** l'élément de raclage (8, 9) comporte un bord de raclage (14, 15) s'étendant selon un angle (α) par rapport à la direction de défilement (13) du moyen de traction (4).

4. Mécanisme de roulement (1) selon la revendication 3, **caractérisé en ce que** le bord de raclage (14, 15) est positionné par rapport à la surface enveloppante intérieure (7) de façon que, lors de la déviation et/ou déformation élastique de l'élément de raclage (8, 9), le bord de raclage (14, 15) ne touche pas la surface enveloppante intérieure (7).

5. Mécanisme de roulement (1) selon une des revendications 1 à 4, **caractérisé en ce que** l'élément de raclage (8, 9) présente un contour extérieur sensiblement triangulaire et est muni d'un élément de fixation (16).

6. Mécanisme de roulement (1) selon la revendication 5, **caractérisé en ce que** l'élément de raclage (8, 9) et l'élément de fixation (16) conçu conjointement avec lui sont conçus sous la forme d'une pièce en tôle déformable élastiquement.

7. Mécanisme de roulement (1) selon une des revendications 1 à 5, **caractérisé en ce que** l'élément de raclage (8, 9) est conçu sous la forme d'une pièce en matière synthétique.

8. Mécanisme de roulement (1) selon une des revendications 1 à 5 et 7, **caractérisé en ce que** le moyen entraîneur (10, 11) est conçu sous la forme d'une pièce en matière synthétique élastique.

9. Mécanisme de roulement (1) selon une des revendications 1 à 5 et 7, **caractérisé en ce que** le moyen entraîneur (10, 11) est conçu sous la forme d'une pièce métallique élastique.
